# EUROPÄISCHE PATENTSCHRIFT

(11) **EP 1 599 708 B1**
(45) Veröffentlichungstag und Bekanntmachung des Hinweises auf die Patenterteilung: **30.05.2007**
(21) Anmeldenummer: 04706654.3
(22) Anmeldetag: 30.01.2004
(51) Int. Cl.: G01H 3/12

(54) **VERFAHREN UND VORRICHTUNG ZUR BILDGEBENDEN DARSTELLUNG VON AKUSTISCHEN OBJEKTEN**
METHOD AND DEVICE FOR IMAGED REPRESENTATION OF ACOUSTIC OBJECTS
PROCEDE ET DISPOSITIF DE REPRESENTATION IMAGEE D'OBJETS ACOUSTIQUES

(30) Priorität: 30.01.2003 DE 10304215
(43) Veröffentlichungstag der Anmeldung: 30.11.2005
(73) Patentinhaber: Gesellschaft zur Förderung angewandter Informatik e.V., 12489 Berlin (DE)
(72) Erfinder: HEINZ, Gerd, 12526 Berlin (DE); TILGNER, Swen, 12439 Berlin (DE); DÖBLER, Dirk, 15754 Friedersdorf (DE)
(74) Vertreter: Hengelhaupt, Jürgen
(86) Internationale Anmeldenummer: PCT/EP2004/000857
(87) Internationale Veröffentlichungsnummer: WO 2004/068085

(56) Entgegenhaltungen:
- NL-A- 9 201 787
- US-A1- 2002 181 721
- PATENT ABSTRACTS OF JAPAN Bd. 0132, Nr. 45 (P-881), 8. Juni 1989 (1989-06-08) & JP 1 046672 A (NIPPON ABIONIKUSU KK), 21. Februar 1989 (1989-02-21)
- "Akustische Kamera AC R16-250"[Online] 2. Oktober 2000 (2000-10-02), XP002293978 Gefunden im Internet: URL:http://web.archive.org/web/20001002034 410/http://www.gfai.de/www_open/perspg/g_h einz/produkte/ac_r/acr16250.htm> [gefunden am 2004-08-25] -& "WAYBACKMACHINE search result for http://www_open/perspg/g_heinz/produkte/ac _r/acr16250.htm"[Online] XP002293979 Gefunden im Internet: URL:http://web.archive.org/web/*/www.gfai. de/www_open/perspg/g_heinz/produkte/ac_r/a cr16250.htm> [gefunden am 2004-08-25]
- "dRec 192 x # EPP"[Online] 24. Februar 2001 (2001-02-24), XP002293980 Gefunden im Internet: URL:http://web.archive.org/web/20010224011 909/http://www.acoustic-camera.com/Produkt e/dataRec/datarec.html> [gefunden am 2004-08-26] -& "WAYBACKMACHINE search result for http://www.acoustic-camera.com/Produkte/da taRec/datarec.html"[Online] XP002293981 Gefunden im Internet: URL:http://web.archive.org/web/*/www.acous tic-camera.com/Produkte/dataRec/datarec.ht ml> [gefunden am 2004-08-26]
- "So laut ist unser Wald" BILD ZEITUNG, 13. November 2002 (2002-11-13), Seite 7, XP002293982 BERLIN BRANDENBURG
- HANNOVER INDUSTRIE 1999, MESSEZEITUNG MZ, 24. April 1999 (1999-04-24), Seite 4, XP002293983 in der Anmeldung erwähnt
- TSCHACHTLI CHRISTIAN: "Harmonisches Lärmorchester" AUTOMOBILREVUE, Bd. 52, 27. Dezember 2001 (2001-12-27), Seiten 18-19, XP002293984

## Beschreibung

Die Erfindung beschreibt ein Verfahren und eine Vorrichtung zur bildgebenden Darstellung von akustischen Objekten durch die Aufnahme von akustischen Karten über ein Mikrofonarray, denen ein Bezugsbild des Messobjekts zugeordnet wird, sowie ein entsprechendes Computerprogramm-Erzeugnis und ein entsprechendes computerlesbares Speichermedium gemäß den Merkmalen der Ansprüche 1, 5, 9 und 10, welche insbesondere einsetzbar sind zur fotographischen und filmischen Dokumentation sowie zur akustischen Analyse von Geräuschquellen, zum Beispiel von Maschinen, Anlagen oder Fahrzeugen.

Mit der Erfindung können akustische Photos oder akustische Filme, frequenzselektive Bilder, Spektren bestimmter Orte sowie akustische Bilder vorbeifahrender Objekte aus unterschiedlichen Entfernungen angefertigt werden.

Es sind unterschiedlichste Verfahren zur Ermittlung oder Darstellung akustischer Emissionen bekannt (DE 3918815 A1, DE 4438643 A1, DE 4037387 A1, DE 19844870 A1, WO 85/02022, WO 9859258, WO 9845727A, WO 9964887 A, WO 9928760 A, WO 9956146 A, WO 9928763 A, WO 11495 A, WO 10117 A, WO 9940398 A, WO-A-8 705 790, WO 85/03359, US 5258922, US 5515298); Heckl, M., Müller, H.A.: Taschenbuch der technischen Akustik. Springer-Verlag Berlin Heidelberg New York, 2. Auflage 1995; Michel, U. Barsikow, B., Haverich, B., Schüttpelz, M.: Investigation of airframe and jet noise in high-speed flight with a microphone array. 3rd AIAA/CEAS Aeroacoustics Conference, 12-14 May 1997, Atlanta, AIAA-97-1596; Hald, J.: Use of Spatial Transformation of Sound Fields (STSF) Techniques in the Automotive Industry. Brüel & Kjaer, Technical Review No. 1-1995, p. 1-23; Estorff, O. v., Brügmann, G., u.a.: Berechnung der Schallabstrahlung von Fahrzeugkomponenten bei BMW. Automobiltechnische Zeitschrift, ATZ, 96 (1994) H. 5, S. 316-320), Brandstein, M., Ward, D.: Microphone Arrays. Springer-Verlag 2001, ISBN 3-540-41953-5.

Nachteil bekannter Techniken ist, dass sie praktisch keine Messung im industriellen Alltag erlauben. Es wird ein hoher Zeitaufwand zum Auf- und Abbau, zur Vor- und Nachbereitung der Aufnahmen benötigt. Eine Zuordnung zwischen Schallkarte und Photo wird durch manuelle Überlagerung mit einer Skizze oder einem Foto des Objekts gewonnen. Die Ausrüstungen sind groß und unhandlich. Irrtümer sind bei der Auswertung nicht ausgeschlossen. Nur große Objekte können kartiert werden. Movies können nicht berechnet werden. Insbesondere ergibt eine bekannte, manuelle Überlagerung zwischen Optik und Akustik vielfältige Fehlermöglichkeiten.

Aufbauend auf einer Feldrekonstruktion basierend auf der sog. Heinz'schen Interferenztransformation (HIT) werden vom Anmelder seit März 1996 Schallbilder entwickelt, die neue Qualitäten aufweisen, z.B. eine Berechenbarkeit instationärer Quellen, siehe http://www.acoustic-camera.com => Projekte. Damit können z.B. Ultra-Zeitlupenaufnahmen wie auch Schallfotos eines schallemittierenden Objekts gemacht werden. Die weltweit erste Überlagerung eines akustischen mit einem Videobild wurde der Öffentlichkeit vom Team im Jahre 1999 vorgestellt, siehe Beitrag http://www.acoustic-camera.com Presse: Hannover Messe, Messezeitung MZ, 24.4.1999, p.4, Sechzehn Ohren hören mehr als zwei. Das Verfahren wurde seither so weiterentwickelt und erprobt, dass unter Industriebedingungen im Gesamtbereich technischer Objekte auf einfache Weise Schallbilder, Spektralbilder und Schallfilme entwickelt werden können. Dokument US2002/0181721 A1 offenbart ein Verfahren zur bildgebenden Darstellung von akustischen Objekten durch die Aufnahme von akustischen Karten über ein Mikrofonarray, denen ein Bezugsbild des Messobjekts zugeordnet wird, wobei das Mikrofonarray und eine optische Kamera in einer vorgebbaren Lage zueinander angeordnet werden und von der optischen Kamera automatisch ein Teil der Messungen dokumentiert wird, akustische Karte und optisches Bild dadurch überlagert werden, dass Objektabstand und Kameraöffnungswinkel ein optisches Bildfeld definieren, auf welches die akustische Karte gerechnet wird, berechnungsrelevante Parameter der Mikrofone eines Arrays in einem Parameterfile des Arrays unverwechselbar gespeichert werden, und akustische Karten optimal belichtet werden, indem verschiedene Methoden gewählt werden, um Minimum und Maximum einer Farbskala geeignet vorzugeben.

**Aufgabe** der Erfindung ist es, ein Verfahren und eine Vorrichtung zur bildgebenden Dokumentation von akustischen Objekten zu beschreiben, mit der Schallquellen im Industriealltag schnell und einfach lokalisiert und analysiert werden können. Es soll eine einfach aufbaubare Vorrichtung ("Akustische Kamera") für unterschiedlichste Einsatzfälle und unterschiedlich große Objekte zwischen Rasierapparat und Flugzeug bereitgestellt werden, mit der akustische Standbilder, akustische Filme, spektrale Bilder oder Linescans erzeugt werden können. Aufnahmen sollen durch eine spezifische Datenstruktur auch Jahre später unverwechselbar nachgerechnet werden können. Akustische Bilder sollen vollautomatisch korrekt "belichtet" werden. Ein Einsatz für eine Vielzahl technischer Untersuchungsobjekte ist zu erreichen durch eine spezifische Modularität. Dabei soll die Vorrichtung stets im Kofferraum eines PKW Platz finden und in wenigen Minuten auf- und abbaubar sein. Unabhängig vom verwendeten Basis-Algorithmus zur Rekonstruktion der Zeitfunktionen soll die Erfindung eine neuartige Meßeinrichtung ausprägen. Jede Messung soll automatisch photografisch dokumentiert werden um Irrtümer bei der Auswertung zu vermeiden. Die Einrichtung soll gegenüber Störungen oder nicht im Bildfeld liegenden Schallquellen möglichst resistent sein.

Diese Aufgabe wird erfindungsgemäß gelöst durch die Merkmale im kennzeichnenden Teil der Ansprüche 1, 5, 9 und 10 im Zusammenwirken mit den Merkmalen im Oberbegriff. Zweckmäßige Ausgestaltungen der Erfindung sind in den Unteransprüchen enthalten.

Ein besonderer Vorteil des erfindungsgemäßen Verfahrens zur bildgebenden Darstellung von akustischen Objekten besteht darin, daß Schallquellen im Industriealltag schnell und einfach lokalisiert und analysiert werden können, indem das Mikrofonarray und eine optische Kamera in einer vorgebbaren Lage zueinander angeordnet werden und von der optischen Kamera automatisch wenigstens ein Teil der Messungen dokumentiert wird, akustische Karte und optisches Bild dadurch überlagert werden, dass Objektabstand und Kameraöffnungswinkel ein optisches Bildfeld definieren, auf welches die akustische Karte gerechnet wird, berechnungsrelevante Parameter der Mikrofone und der Kamera eines Arrays in einem Parameterfile des Arrays unverwechselbar gespeichert werden, Verstärkerparameter in einem oder mehreren, den Verstärkerbaugruppen oder dem Datenrecorder zugeordneten Parameterfile gespeichert werden, Mikrofonarray und Verstärkerbaugruppen bzw. Datenrecorder jeweils elektronische Signaturen besitzen, die entsprechende Parameterfiles unverwechselbar lädt, das zu berechnende akustische Bildfeld in Teilflächen zerlegt wird, deren Schwerpunkte Koordinaten der zu berechnenden Bildpunkte darstellen, akustische Karten optimal belichtet werden, indem verschiedene Methoden (Absolut, Relativ, Manuell, Minus_Delta, Lin/Log, All, Effektivwert, Peak) gewählt werden, um Minimum und Maximum einer Farbskala geeignet vorzugeben, Gleichlauffehler aller Mikrofone und Verstärkerkanäle dadurch eliminiert werden, dass Aufnahmen mit entsprechenden Parametern aus den Parameterfiles des Mikrofonarrays und des Datenrecorders kompensiert werden, Datensätze der Kameraaufnahmen und ihnen zugeordnete Datensätze der Mikrofon-Zeitfunktionen, zeitsynchronsignale, Szeneninformationen und Parameterfiles von Mikrofonarray und Datenrecorder zusammen mit Informationen über diese Zuordnung abgespeichert werden. Dabei liegt ein besonderer Vorteil darin, wenn die Datensätze der Kameraaufnahmen unlösbar mit den Datensätzen der Mikrofon-Zeitfunktionen, mit Zeitsynchronsignalen, mit allen Szeneninformationen und Parameterfiles von Mikrofonarray und Datenrecorder verschmolzen in einem Datenfile abgespeichert werden.

Eine Vorrichtung zur bildgebenden Darstellung von akustischen Objekten durch die Aufnahme von akustischen Karten über ein Mikrofonarray, denen ein Bezugsbild des Messobjekts zugeordnet wird, ist vorteilhafterweise so ausgebildet, dass in das Mikrofonarray eine optische Kamera integriert ist, die mit dem Mikrofonarray eine Einheit bildet, wobei über Mittel zur Datenübertragung Mikrofondaten, Kamerabild(er) und Zeitsynchroninformationen zwischen Mikrofonarray, einem Datenrecorder und einer Datenverarbeitungseinrichtung ausgetauscht werden. Dabei ist es insbesondere von Vorteil, wenn die akustische Kamera als Videokamera und die Datenverarbeitungseinrichtung als PC oder Notebook ausgebildet sind. Statt eines Personal Computers kann auch ein Signalprozessorboard oder Spezialrechner benutzt werden kann, der in den Datenrecorder integriert ist.

Ein Computerprogramm-Erzeugnis zur bildgebenden Darstellung von akustischen Objekten umfaßt ein computerlesbares Speichermedium, auf dem ein Programm gespeichert ist, das es einem Computer ermöglicht, nachdem es in den Speicher des Computers geladen worden ist, ein Verfahren zur bildgebenden Darstellung von akustischen Objekten durch die Aufnahme von akustischen Karten über ein Mikrofonarray, denen ein Bezugsbild des Messobjekts zugeordnet wird, durchzuführen, wobei die bildgebende Darstellung die Verfahrensschritte gemäß einem der Ansprüche 1 bis 4 umfaßt.

Um ein Verfahren zur bildgebenden Darstellung von akustischen Objekten durchzuführen, wird vorteilhafterweise ein computerlesbares Speichermedium eingesetzt, auf dem ein Programm gespeichert ist, das es einem Computer ermöglicht, nachdem es in den Speicher des Computers geladen worden ist, ein Verfahren zur bildgebenden Darstellung von akustischen Objekten durch die Aufnahme von akustischen Karten über ein Mikrofonarray, denen ein Bezugsbild des Messobjekts zugeordnet wird, durchzuführen, wobei die bildgebende Darstellung die Verfahrensschritte gemäß einem der Ansprüche 1 bis 4 umfaßt.

In einer bevorzugten Ausführungsform des erfindungsgemäßen Verfahrens ist vorgesehen, dass die Zeitfunktionen in einem virtuellen 3D-Koordinatensystem, in welchem die Mikrofonkoordinaten erfaßt sind, zur Darstellung der Erregungsquellen und/oder -orte in einem Computer abgespielt werden.

Für die Auswertung der Messungen ist es von Vorteil, wenn die Interferenzwerte für Punkte der akustischen Karte für
- einen Zeitpunkt oder
- eine Folge von Zeitpunkten
visualisiert werden. Um bei der Visualisierung von Folgen von Zeitpunkten Darstellungen zu erhalten, die unserer Erfahrung von der Schaltausbreitung entsprechen, müssen die Zeitfunktionen zeitlich rückwärts abgespielt werden.

Es erweist sich als vorteilhaft, wenn zu Punkten der akustischen Karte ein Tupel von Verzögerungszeiten bestimmt wird, wobei ein Tupel die Verzögerungszeiten der akustischen Signale zwischen erregendem Ort und den Mikrofonen des Arrays umfaßt.

Es ist ebenfalls ein wesentlicher Vorteil, wenn algebraische Verknüpfungen von Zeitfunktionen ausgeführt werden, derart, dass beim Zugriff auf die Daten der Mikrofonkanäle die in einem zugehörigen Tupel erfaßten Zeitverzögerungen ausgewertet werden.

In einer bevorzugten Ausführungsform ist dabei vorgesehen, dass die Zeitfunktion eines Ortes für alle Zeitpunkte einer akustischen Karte berechnet wird und anschließend für die Zeitfunktion ein einziger dem Ort zugeordneter Wert (Interferenzwert), insbesondere die mittlere Höhe der Zeitfunktion, durch algebraische Operationen wie bspw. Effektivwert, Maximum, Sigmoid u.dgl. ermittelt wird.

Es kann sich als vorteilhaft erweisen, wenn zur Visualisierung des Schallbildes eines beobachteten Objektes der Interferenzwert der Zeitfunktion einem Bildpunkt als Grau- oder Farbwert zugeordnet wird.

Eine andere bevorzugte Ausführungsform des erfindungsgemäßen Verfahrens sieht vor, dass das Ergebnis einer algebraischen Operation wie bspw. Addition für einen Zeitpunkt Tx notiert wird, für welchen die gemeinsame Verzögerungszeit aller Kanäle eliminiert wird.

Die Abarbeitung der Kanaldaten kann
- gemäß dem zeitlichen Ablauf erfolgen, um den Zeitbezug zu einer äußeren Zeitreferenz für die Überlagerung von akustischen und optischen Ton- bzw. Bildfolgen zu erhalten, oder
- entgegen der Zeitachse erfolgen, um eine Wiedergabe expandierender akustischer Wellenfelder zu erreichen.

In einer weiteren bevorzugten Ausführungsform des erfindungsgemäßen Verfahrens ist vorgesehen, dass für jedes Mikrofon des Mikrofonarrays der Typ, die Kennempfindlichkeit, die Membran-Mittelpunktskoordinate (x, y, z), die Achsenausrichtung (dx, dy, dz), die Ortskurven der Amplituden und der Verzögerungszeiten und für die optische Kamera Typ, Bildöffnungswinkel, maximale Bildfrequenz und Pixelauflösungen in einem dem Mikrofonrray zugeordneten Parameterfile gespeichert werden, wobei dem Parameterfile eine Identifikationsnummer zugeordnet wird, die mit der Hardware-Signatur des Arrays referenziert wird.

Darüber hinaus ist von Vorteil, wenn der Abstand der optischen Kamera zum akustischen Objekt in einem Dialogfeld der Software vorgegeben wird und im Datenfile mit abgespeichert wird, sodass mit einer bekannten Objektivöffnung der optischen Kamera die physischen Begrenzungen sowie die Koordinaten der zu berechnenden akustischen Karte automatisch ermittelt werden.

Für die Handhabung der Steuerung bei Aufnahme und/oder Wiedergabe von akustischen Karten kann es ein Vorteil sein, wenn die Bedienoberfläche derart gestaltet ist, dass in einem Spektrogramm-Fenster per Mauszug gleichzeitig ein Frequenz- und Zeitbereich gewählt wird, für den ein akustisches Bild oder ein Movie entwickelt werden kann.

Um die Qualität der akustischen Karten sicherzustellen, ist in einer bevorzugten Ausführungsform des erfindungsgemäßen Verfahrens vorgesehen, dass der Gleichlauf aller Mikrofone und Verstärkerkanäle sichergestellt wird, indem alle Verstärkungseinstellungen, Laufzeiten und Frequenzabhängiqkeiten der Vorverstärker vermessen, alle Daten in einem entsprechenden Parameterfile gespeichert und die Zeitfunktionen mit den so gewonnenen Kalibrierdaten kompensiert werden.

Hierzu erweist es sich als vorteilhaft, wenn vor einer Messung die präzise Überlagerung und Ausrichtung zwischen optischem Bild und akustischem Bild überprüft werden kann, indem mit einem Kalibriertester ein Testgeräusch erzeugt wird, mit dem die richtige Überlagerung von Kamerabild und akustischer Karte überprüft werden kann.

Es ist darüber hinaus von Vorteil, wenn Videokamera und Mikrofone des Arrays in einem gemeinsamen 3D-Koordinatensystem angeordnet sind, wobei das Mikrofonarray und die optische Kamera mechanisch eine Einheit bilden und auf ein gemeinsames Bildfeld kalibriert sind.

In einer anderen bevorzugten Ausführungsform des erfindungsgemäßen Verfahrens wird eine fehlerfreie Überlagerung von Video- und Schallbild in allen Bildpunkten eines Bildes dadurch gewährleistet, dass mit bekannten Transformationen entweder das akustische Bild kissenförmig verzerrt oder das optische Bild entzerrt wird.

Für die Auswertung und/oder den Vergleich von Messungen ist es von Vorteil, wenn die Aussteuerung der Analog-Digital-Konverter des Datenrecorders angezeigt und im Datenfile mit abspeichert wird.

Für die Analyse akustischer Karten, insbesondere von Aufnahmen komplexer Objekte, ist es hilfreich, wenn die Bedienoberfläche u.a. folgende Funktionen bereitstellt:
- mit Mausklick auf einen Bildpunkt eines akustischen Bildes erscheint in einem zweiten Fenster die zugehörige Spektral- oder Zeitfunktion und/oder
- es ist ein Abhörmode einschaltbar, bei dem per Mausberührung eines Bildpunkts eines akustischen Bildes dessen Zeitfunktion rekonstruiert wird und als Ton repetierend abgespielt wird.

Um bereits berechnete Ergebnisse schnell wieder laden zu können und Farbtabellen verschiedener Ergebnisse aufeinander abstimmen zu können, ist es vorteilhaft, wenn Bilder, Bewegungs- und Spektralfilme als Bild oder als Movie und/oder als Interferenzwertmatrizen in speziellen Fileformaten gespeichert werden können.

In einer bevorzugten Ausführungsform des erfindungsgemäßen Verfahrens ist vorgesehen, dass ein Bild aus der numerischen Differenz der Effektivwerte zweier akustischer Bilder berechnet wird und als Differenzbild darstellbar ist.

In einer anderen bevorzugten Ausführungsform des erfindungsgemäßen Verfahrens ist vorgesehen, dass Mikrofondaten in einen umlaufend organisierten Speicher geschrieben werden, so daß wahlweise gleitend vor, während oder nach Triggerung aufgenommen werden kann.

Eine weitere Ausführungsform sieht vor, dass die Videokamera im Mode "akustischer Film" repetierend zu definierten Zeiten ausgelöst wird, oder daß die Videokamera kontinuierlich Bilder liefert und ein Zeitsynchronsignal an den Datenrecorder liefert, welches in einem Synchronkanal aufgezeichnet wird.

Es erweist sich darüber hinaus als Vorteil, wenn ein Oszilloskop- oder Live-Preview-Mode einstellbar ist, bei dem problemangepasst und repetierend wählbar ein Zeitfunktionsabschnitt sowie ein zugehöriges Videobild aufgenommen werden und zusammen zu einem akustischen Bild verarbeitet, berechnet und angezeigt werden, wobei während der Rechenzeit vom Datenrecorder bereits neue Daten aufgenommen und zwischengespeichert werden.

In einer bevorzugten Ausfiihrungsform des erfindungsgemäßen Verfahrens ist vorgesehen, daß in das Mikrofonarray eine Videokamera fest eingebaut ist, die automatisch bei jeder Messung ein Bild oder eine Bildfölge aufnimmt oder die im video-Mode oder im Oszilloskop-Mode kontinuierlich Bilder liefert.

In einer anderen bevorzugten Ausführungsform des erfindungsgemäßen Verfahrens ist vorgesehen, dass akustische Standbilder und akustische Filme generiert werden, indem in der Zeitfunktionsdarstellung der Mikrofone ein Intervall markiert wird, das entsprechend der Cache-Struktur des Prozessors in Teilabschnitte zerlegt wird und deren Teilbilder zum Gesamtbild gemittelt werden.

Es erweist sich als vorteilhaft, wenn zur Berechnung eines Films die Länge der Teilabschnitte über die gewählte Bildfrequenz vorgegeben wird und von jedem Teilabschnitt ein einzelnes Bild erzeugt wird, wobei über Vorgabe eines Faktors gewählt werden kann, wie viele Teilabschnitte zu je einem Bild gemittelt werden sollen.

Ein weiterer Vorteil des erfindungsgemäßen Verfahrens besteht darin, dass die akustische Karte mit einer Farbtabelle dargestellt wird, indem eine farbige akustische Karte einem Videobild überlagert wird, dessen Kanten mittels eines Kanten-Operators extrahiert werden können und/oder welches mittels Kontrast- oder Grauwertregler angepaßt werden kann. Dabei ist in einer speziellen Ausführungsform vorgesehen, dass die Überlagerung von akustischer Karte und Videobild gesteuert, wird, indem über Menübuttons verschiedene Ansichten eingeschaltet werden können (Kantenbild, Grauwertbild, Videobild, akustische Karte), wobei ein Schieberegler jeweils den Schwellwert des Kanten-Operators oder den Kontrast oder den Grauwert des Videobildes steuert.

Darüber hinaus erweist es sich als vorteilhaft, dass für jeden Punkt im akustischen Bild Zeitfunktion, Frequenzfunktion, Schalldruck, Koordinaten, Klang oder Korrelation mit einer bekannten Zeitfunktion durch Mausklick auf diesen Punkt und ein Menue unter der rechten Maustaste aufgerufen werden können. Ein weiterer Vorteil besteht darin, dass in einem Fenster ein Frequenzintervall selektiert wird und in einem zweiten Fenster das zugehörige Spektralbild erscheint oder dass im zweiten Fenster ein Spektralbereich selektiert wird, dessen akustisches Bild wiederum im ersten Fenster dargestellt wird. Vorteilhaft ist es ebenfalls, wenn ein Zeitfunktions-Korrelationsbild gebildet wird, indem ein akustisches Foto berechnet wird und die rekonstruierten Zeitfunktionen der Bildpunkte mit der gewählten Zeitfunktion korreliert werden und dieses Ergebnis in einem weiteren Fenster angezeigt wird. In einer anderen bevorzugten Ausführungsform ist vorgesehen, dass in den Modi "akustisches Photo" und "Linescan" ein Videobild zum Zeitpunkt der Triggerauslösung aufgenommen wird und der Triggerzeitpunkt in den Zeitfunktionen dargestellt wird.

In einer weiteren bevorzugten Ausführungsform des erfindungsgemäßen Verfahrens ist vorgesehen, dass Zeitsynchroninformationen zwischen PC, Datenrecorder und Videokamera ausgetauscht werden, mit denen die zeitliche Zuordnung zwischen Videobild und Zeitfunktionen der Mikrofone hergestellt wird.

Eine vorteilhafte Ausführungsform der erfindungsgemäßen Anordnung ist dadurch ausgezeichnet, dass alle Mikrofondaten eines Arrays über eine gemeinsame Verbindung (Kabel oder Bus) geführt werden und über einen gemeinsamen ein- oder mehrteiligen Stecker an den Datenrecorder angeschlossen sind und/oder dass die Zuleitung der Videokamera ebenfalls in diese gemeinsame Verbindungsleitung integriert ist.

Eine andere bevorzugte Ausführungsform der erfindungsgemäßen Anordnung sieht vor, dass ein Mikrofonarray einen Signaturchip im an den Datenrecorder angeschlossenen Stecker enthält.

Des weiteren erweist es sich als Vorteil, dass Mikrofonarrays unterschiedlicher Kanalzahl an einen Datenrecorder pinkompatibel über denselben, ein- oder mehrteiligen, für verschiedene Arrays identischen Steckertyp anschließbar sind, wobei nicht benötigte Eingänge im Stecker u.U. kurzgeschlossen sind.

Spezielle Ausführungsformen der erfindungsgemäßen Anordnung zeichnen sich dadurch aus, dass ein akustisch transparentes Mikrofonarray für zweidimensionale Messungen in Innenräumen vorteilhaft aus einer Videokamera und auf einem Ring in gleichen Abständen angeordneten Mikrofonen besteht, oder dass ein akustisch reflexives Mikrofonarray für zweidimensionale Messungen in Innenräumen vorteilhaft aus einer Videokamera und auf einer Fläche in Kreisform in gleicher Winkelteilung angeordneten Mikrofonen besteht, wobei bei einer Ausführung als Koffer der Datenrecorder integriert ist, oder dass ein Mikrofonarray für dreidimensionale Messungen in Kabinen vorteilhaft als kugelförmiger Regelflächner ausgebildet ist, wobei die Mikrofone auf der Oberfläche gleichverteilt liegen. Als Mittel zur Datenübertragung sind Kabelverbindungen, Funkverbindungen oder Infrarotverbindungen vorgesehen.

Eine andere bevorzugte Ausführungsform der erfindungsgemäßen Vorrichtung sieht vor, dass an den Datenrecorder ein Kalibriertestgerät anschließbar ist, welches einen Schallerzeuger enthält.

Es ist darüber hinaus ein Vorteil, wenn eine unlösbar verbundene Einheit aus Mikrofonarray und Videokamera auf einem Fotostativ schwenkbar montiert ist.

Zusätzlich oder alternativ ist in einer weiteren Ausführungsform der erfindungsgemäßen Vorrichtung vorgesehen, dass der Datenrecorder in das Mikrofonarray integriert ist und diese Einheit auf ein Fotostativ schwenkbar montiert ist.

Für Messungen über große Distanzen erweist es sich vorteilhaft, wenn ein faltbares Mikrofonarray eingesetzt wird, das aus einer Videokamera und mindestens drei mit je n Mikrofonen bestückten, nicht in einer Ebene liegenden Rohren besteht, die mit mindestens zwei Gelenken verbunden sind.

Die Erfindung wird nachfolgend in Ausführungsbeispielen näher erläutert.

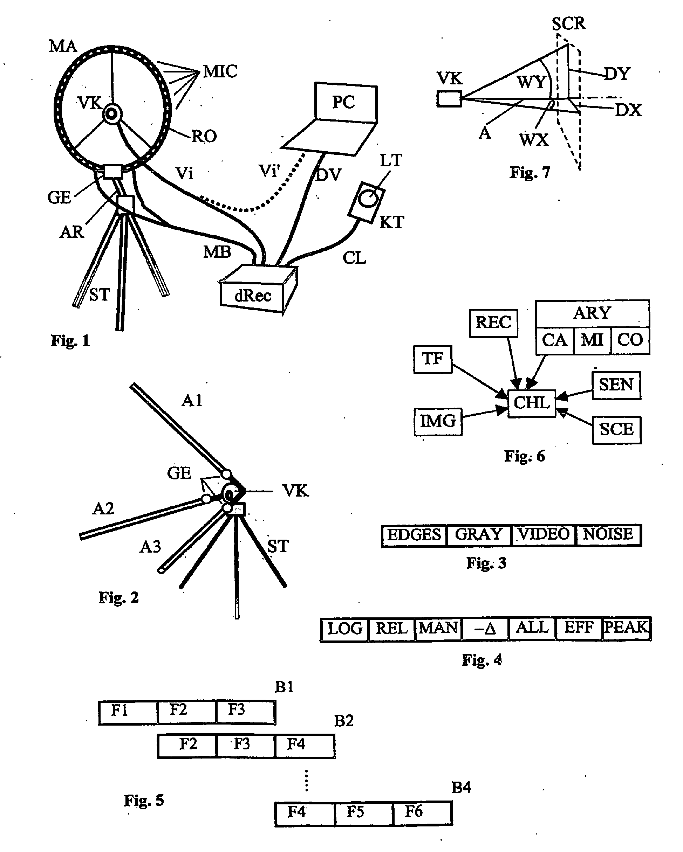

**Fig.1** zeigt eine schematische Darstellung einer typischen Ausführung der Vorrichtung nach der Erfindung für Messungen an Motoren. Mikrofone MIC des Mikrophonarrays MA liegen gleichverteilt in einem ringförmig gebogenen Rohr RO, welches über ein Gelenk GE und einem Arm AR an einem Stativ ST befestigt ist. Sie sind über eine Verbindung MB an einen Datenrecorder dRec angeschlossen. Eine Videokamera VK ist über eine Verbindung Vi an den Datenrecorder dRec oder alternativ über Vi' direkt an den Computer PC angeschlossen. An den Datenrecorder dRec ist über eine Verbindung CL ein Kalibriertester KT angeschlossen, der einen Lautsprecher LT enthält. Zwischen dem Computer PC und dem Datenrecorder besteht eine Datenverbindung DV. Eine Modifikation ergibt sich, wenn der Datenrecorder dRec in das Mikrofonarray MA integriert werden würde.

**Fig.2** zeigt eine spezielle Ausführung eines auf einem Stativ ST stehenden, zusammenfaltbaren Mikrofonarrays für Fernmessungen. Mikrofone befinden sich in Armen A1 bis A3. Diese sind um arretierbare Gelenke GE schwenkbar, sodass das zusammengefaltete System in einem PKW transportiert werden kann. In das System ist wiederum eine Videokamera VK fest integriert.

**Fig.3** zeigt ein typisches Menue für Bildüberlagerungs-Operationen. Die akustische Karte kann mit einer Taste NOISE, das Videokamerabild mit einer Taste VIDEO ein- und ausgeschaltet werden. Das Videobild kann mit einer Taste GRAY entfärbt werden, eine Taste EDGES sorgt für eine Kantenextraktion des Videobildes, wobei bei Nutzung von GRAY und EDGES Schieberegler für Helligkeit, Kontrast bzw. Kantenstärke vorgesehen sind.

**Fig.4** stellt typische Menüs für die Skalierung der Farbtabelle der akustischen Karte dar. Mit einer Taste LOG wird zwischen linearer und logarithmischer Skalierung der Farbtabelle des akustischen Bildes umgeschaltet. Mit einer Taste ABS kann ein kompletter Film zwischen die absolut minimalen und maximalen Schalldruckwerte skaliert werden. Mit der Taste REL wird jedes Einzelbild eines Films separat auf maximalen Relativkontrast skaliert. Eine Taste MAN öffnet zwei Eingabefenster, in denen Maximum und Minimum manuell vorgegeben werden können. Eine Taste -Δ ermöglicht automatische Farbskalierung des akustischen Bildes. Sie öffnet ein Eingabefenster zur Eingabe eines Differenzwertes, um den das Minimum gegenüber dem in einem Bild vorhandenen Maximum abgesenkt wird. Eine Taste ALL gestattet die Übertragung eines gewählten Maximums und Minimums auf weitere Bilder oder Filme. Ein Effektivwertbild wird mit der Taste EFF eingeschaltet, wohingegen die Taste PEAK ein spitzenbewertetes Bild darstellt.

**Fig.5** zeigt schematisch einen rechenzeitsparenden, vorteilhaften Verfahrensschritt für die Entwicklung akustischer Filme. Entsprechend der gewählten Bildfrequenz wird ein in den Kanaldaten selektierter Bereich eines zu berechnenden Films in Teilbilder (Frames) F1 bis F6 aufgeteilt. In einem Eingabefenster wird eine Bildüberlappung (im Beispiel gleich drei) gewählt. Das erste Bild B1 wird aus den ersten drei Frames F1 bis F3 durch gleitende Mittelwertsbildung berechnet. Das zweite Bild B2 aus den Frames F2 bis F4 usw. Aus 6 Frames entstehen so 4 Folgebilder B1 bis B4 eines Films. Dabei sind Videobilder den Frames so zugeordnet, dass je ein Videobild zu einem Frame gehört. Bei Zeitlupendarstellungen, bei denen die Framerate höher ist als die gewählte Video-Bildrate, wird das jeweils letzte Videobild solange fortlaufenden Frames zugeordnet, bis ein nächstes Videobild bereitsteht. Mit dieser Methode gelingt es, einmal berechnete, akustische Frames nicht mehrfach zu berechnen. Auch ergeben sich durch Wahl des eingestellten Faktors der Bildüberlappung wählbar ruckelfreie Bildsequenzen.

**Fig.6** zeigt schematisch die in einem Meßdatenfile CHL abzuspeichernden Informationen. Es bedeuten: TF die Zeitfunktionen incl. Samplerate; IMG das Einzelbild oder die Videobilder einer Sequenz; REC die Verstärkerparameter jedes Mikrofonkanals; ARY die Parameter des Arrays, die sich insbesondere aus möglichen Öffnungen und Pixelauflösungen der Videokamera CA, aus Kennempfindlichkeiten und Ortskurven der Mikrophone MI und aus Koordinaten und Orientierungen CO von Kamera und Mikrophonen zusammensetzen. Weiterhin sind darin aktuelle Szenenparameter SCE wie Objektivöffnung, Meßabstand, Luftdruck und Temperatur sowie Übertragungsfaktoren und Parameter von Sonderkanälen SEN abgespeichert. Die Datentypen REC, ARY und SEN werden aus spezifischen, voabgespeicherten Files entnommen, wobei die Parameterfiles REC und ARY einmalig im Kalibriervorgang erzeugt sind, der Typ SEN sitzungsabhängig variierbar ist.

**Fig.7** zeigt, wie Koordinaten eines virtuellen Bildfeldes SCR aus den Objektivöffnungswinkeln WX und WY und dem Objektabstand A gewonnen werden. Aus WX, WY und A werden die Strecken DX und DY bestimmt, aus diesen die Koordinaten des Bildfeldes.

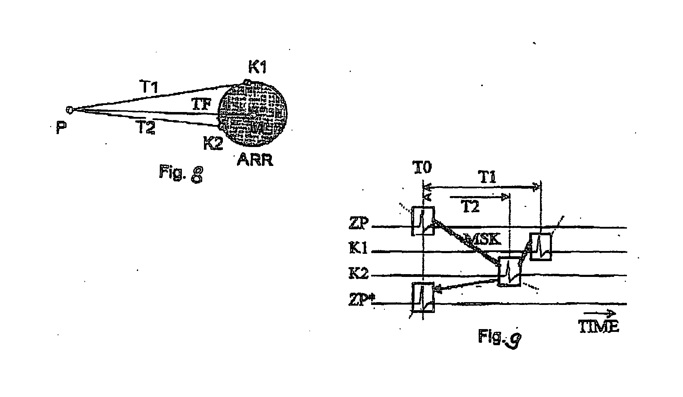

**Fig.8** zeigt die räumliche Anordnung der Mikrofone K1 bis KN in einem Array ARR.

**Fig.9** veranschaulicht den zeitlich versetzten Verlauf der Zeitfunktion ZP in den Mikrofonkanälen K1 und K2.

Akustische Karten sind schwer lesbar, sofern kein Bezugsbild des Meßobjekts überlagert ist. Manuelle Überlagerung anhand von Bezugspunkten ist zeitaufwendig und fehlerintensiv. Bei bewegter Szene (Film als Serie von Fotos) oder in Unkenntnis der Versuchsanordnung ist sie nahezu ausgeschlossen. Die Erfindung überwindet diese Schwierigkeit, indem in jedes Mikrofonarray eine (digitale) Videokamera eingebaut ist, die pro Messung ein Foto oder einen Film aufnimmt. Die Fotos werden an die von den Mikrofonen aufgenommenen Daten gekoppelt und mit diesen zusammen als File gespeichert oder geladen. In diesen Datenfile werden zusätzlich alle Meßeinstellungen, Parameter des verwendeten Mikrofonarrays und Parameter des Datenrecorders aufgenommen.

Für einfachste Handhabung ist eine automatische Überlagerung von Foto(s) und Karte (n) zu realisieren. Erfindungsgemäß wird dazu die x- und y-Bildöffnung der Kamera pro Meter in einem Parameterfile des Arrays eingetragen. Hat die Kamera mehrere Bildöffnungen, werden alle Möglichkeiten eingetragen. Manuell wird die Entfernung zum Meßobjekt vermessen. Aus der aktuellen Bildöffnung der Kamera sowie der Objektentfernung werden erfindungsgemäß die Koordinaten des zu berechnenden Bildfeldes bestimmt. Manuell ist zusätzlich eine Rasterauflösung des Bildes, z.B. entlang der x-Achse vorzugeben. Dann kann das Bild berechnet werden. Dabei wird pro Rasterpunkt einmal gerechnet. So kann der Nutzer anhand der Rasterauflösung die Rechenzeit vorgeben: hohe Rasterauflösung bedeutet hohe Rechenzeit.

Für den Einsatz an verschieden großen Objekten von Rasierapparat bis Flugzeug ist es erforderlich, daß eine akustische Kamera leicht, kompakt und robust ist sowie zuverlässig funktioniert. Das ist nur mit relativ geringer Anzahl von Mikrofonkanälen erreichbar (typisch um 30). Nun sind aber akustische Grenzen gesetzt: Der Mikrofonabstand muß in der Größenordnung der gesuchten, dominanten Wellenlängen liegen, sonst stören Fremdinterferenzerscheinungen die Rekonstruktion (Interferenz von Welle i mit Vorgänger i-1 oder Nachfolger i+1). Außerdem ist die Bildöffnung des Arrays nicht beliebig variierbar: wird das Array zu dicht an das Objekt gehalten, werden Mikrofonkanäle partial abgeschattet und verursachen Fehler. Wählt man zu großen Objektabstand, sind die akustischen Karten zu unscharf. Da ein großer Wellenlängenbereich (100 Hz - 3,4 Meter bis 100 kHz ~ 3,4 mm) zu überstreichen ist, existiert bei Forderung geringer Kanalzahl nur die Lösung, verschieden große Mikrofonarrays zu bauen, deren Größe und Mikrofonabstand sowie deren Form den jeweiligen, zu kartierenden Objekten angepaßt ist. So wurden drei Grundformen entwickelt, mit denen praktisch der gesamte Akustikbereich abgedeckt werden kann. Zur Lösung der Aufgabe ist zusätzlich zu beachten, daß die Mikrofone zur Vermeidung von Fremdinterferenz stochastisch angeordnet sein sollten, zur Vermeidung von Ortskurvenfehlern aber regular und symmetrisch in Bezug auf die Achsen. (2D: x,y bzw . 3D: x, y, z). Erfindungsgemäß haben sich drei Array-Grundformen bewährt:
(1) Für 3D-Rundumkartierung in Innenräumen (z.B. PKW) eignet sich eine akustisch offene, aus Kohlenfasern laminierte, kubische Ikosaederanordnung ("Cube") von 30 cm Durchmesser und 32 Kanälen. Das Array hat bezüglich aller drei Achsen hervorragende Symmetrieeigenschaften und zeigt auch eine gute Einzelachsstochastik. Die Ausführung ist zu erkennen an ineinandergreifenden Fünf- und Sechseckfiguren.
(2) Für 2D-Kartierung von Maschinen hat sich eine Ringanordnung bestens bewährt. Dabei werden die Mikrofone ringförmig in gleichem Abstand angeordnet. Ungerade Anzahl von Kanälen weist minimale Nebenkeulen der Ortskurven auf, gerade Anzahl dafür beste Symmetrie. Die Ausführung kann akustisch offen (Ring) oder akustisch reflexiv erfolgen (Wafer) bei frequenzabhängigen Ringdurchmessern im Bereich von 10 cm bis 1,5 m. Während offene Ringarrays nach vorn und hinten gleichermaßen gut hören, wird das rückwärtige Feld nur bei reflexiv ausgeführtem Array zerstört. Hier liegt die reflexive Fläche in der Ebene der Mikrofonmembranen. Arrays ringförmiger Anordnungen zeigen bezüglich zweier Achsen beste Symmetrieeigenschaften sowie beste Einzelachsstochastik.
(3) Für 2D-Kartierung im Außenbereich über große Entfernungen ist zusätzlich die Transportmöglichkeit zu bedenken. Dafür eignen sich faltbare Anordnungen mit einer ungeraden Anzahl (mindestens drei) von mikrofontragenden Armen besonders. Da es sich um offene Arrays handelt, sind zusätzlich Möglichkeiten der Rückwärtsdämpfung zu schaffen. Dies wird erfindungsgemäß erreicht, indem die Arme im ausgefalteten Zustand nicht in einer Ebene liegen. Gegenüber Anodnungen mit vier Armen weist die dreiarmige Anordnung ein besseres Fremdinterferenzverhalten auf. Ausgewogene Ortskurven werden durch logarithmisch geteilte Anordnung der Mikrofone auf den Armen erreicht.

Fehlerhafte Koordinaten der Mikrofone führen zu fehlerhaften Rechenergebnissen: Beim Gebrauch verschiedener Mikrofonarrays erweist es sich als vorteilhaft, die Lagekoordinaten der Mikrofonkapseln, deren Seriennummern, die elektrischen Kenndaten sowie Lage und Achsenrichtung von Laser und Kamera in einem dem Array zugeordneten Parameterfile (passiv als ASCII, aktiv als DLL) zu vermerken. Von der Kamera ist dort auch Öffnungswinkel in Abhängigkeit von gewählter Bildauflösung und gewähltem Zoomobjektiv zu vermerken. Bei Verwendung von Wechselobjektiven sind zusätzlich die Öffnungswinkel des jeweiligen Objektivtyps verzeichnet, sodaß nur noch Objektivtyp und Entfernung angegeben werden müssen, um eine eindeutige Einordnung des Fotos in ein virtuelles 3D-Koordinatensystem zu erhalten. Dieser File wird beim Starten der Software geladen. Ein Mikrofonarray erhält einen digitalen Signaturchip, der dafür sorgt, daß jedes Array eindeutig identifiziert und zugeordnet werden kann. Im Parameterfile des Arrays werden folgende Daten von Kamera und Mikrofonen gespeichert: von der Kamera: Kameratyp, Treibertyp, Seriennummer, Auflösung)en), Objektive, Öffnung(en) und Bildrate(n). Von jedem Mikrofon: Mikrofontyp, Seriennummer, Kennempfindlichkeit, Membranmittelpunktskoordinate, 3D-Richtungsvektor, Ortskurven von Amplitude und Verzögerungszeit sowie Kanalzahl und Signatur des Arrays. In einem Parameterfile des Datenrecorders werden gespeichert: Kanalzahl, Verstärkungen aller Kanäle pro Verstärkungsstufe, Samplingraten, maximale Aufzeichnungstiefe, Hardwarekonfiguration sowie Wandler-Übertragungsfunktion.

Es ist zu erreichen, daß alle zu einer Aufnahme gehörenden Daten unverwechselbar gespeichert werden und für spätere Nachrechnungen fehlerfrei zur Verfügung stehen. Dazu werden Mikrofonkoordinaten und -ausrichtung, Kennempfindlichkeiten und Ortskurven, aktueller Fokus, verwendete Bildöffnung der Videokamera, Kalibrierdaten von Verstärker, Kamera und Mikrofonen und Array, Samplingrate, Videobild oder Videofilm sowie Zeitfunktionen aller Mikrofone und Sonderkanäle in einem einzigen Datenfile gespeichert. Mit diesem File ist jederzeit eine Nachrechnung einer älteren Aufnahme möglich, ohne daß spezifisches Wissen zu dieser Szene nötig ist.

Für die automatischen Zuordnung von akustischer Karte und Video-Kamerabild oder der manuellen Zuordnung von Skizze und akustischer Karte sind einfache Verfahren zu entwerfen. Erfindungsgemäß haben sich zwei Zuordnungsmethoden bewährt:
(1) Automatik: Der Abstand zum Objekt wird in einem Dialogfeld manuell vorgegeben. Abstand und dem Array-Parameterfile entnommene Objektivöffnung der Videokamera bestimmen die physische Begrenzung sowie die Koordinaten der zu berechnenden akustischen Karte. Dabei gibt das gewählte Video-Bildformat sowie das eingestellte Zoom-Format tabellarisch oder numerisch die Öffnungswinkel WX, WY vor.
   Zusammen mit dem Objektabstand A können die physischen Koordinaten des Bildfeldes bestimmt werden.
(2) Manuell: Ein auf einer Skizze bekannter Abstand und ein bekannter Punkt werden markiert. Daraus wird das zu berechnende Bildfeld samt Koordinaten bestimmt.

Um Rechenzeit zu sparen, ist die akustische Karte manuell effizient in zu berechnende Bildpixel aufzuteilen. Das zu berechnende, akustische Bildfeld (ebene Fläche oder 3D-Objekt) ist dafür in Teilflächen zu zerlegen. Deren Schwerpunkte stellen Koordinaten zu berechnender Bildpunkte dar. Der dem Schwerpunkt zugehörige Interferenzwert färbt diese Fläche ein. Der Nutzer gibt die Anzahl der Bildpunkte entlang der x- oder y-Achse in einem Dialogfeld vor, oder er gibt ein entsprechend dreieckszerlegtes 3D-Modell vor.

Um das Gerät als Meßinstrument einsetzen zu können, ist ein Verfahren zu entwickeln, welches reproduzierbare Ergebnisse liefert. Die Aufgabe wird dadurch gelöst, daß die Zeitfunktionen der Schwerpunkte der Teilflächen im selektierten Intervall rekonstruiert werden. Deren Effektivwerte charakterisieren z.B. den Schalldruck eines äquivalenten Kugelstrahlers in gleicher Entfernung.

Videokameras besitzen die Eigenschaft, kissenförmig verzerrte Bilder zu liefern. Es sind Verfahren anzugeben, die eine fehlerfreie Überlagerung von Video- und Schallbild in allen Bildpunkten eines Bildes gestatten. Um orthogonal unverzerrte, akustische Karten zur Deckung bringen zu können, ist mit üblichen Transformationen entweder das aus der Rekonstruktion kommende, orthogonale, akustische Bild zu verzerren oder das optische Bild ist zu entzerren. Ist die Videokamera außermittig im Mikrofonarray angeordnet, wird zusätzlich der Versatz des Bildes in der jeweiligen Objektentfernung über eine Transformation eingerechnet.

Lange Wellen ergeben matschige Bilder mit geringem Schalldruck-Kontrast. Es sind Methoden zur Belichtung und zur Schärfung des Kontrasts anzugeben, die auch vollautomatisch gute Bilder liefern. Die Aufgabe kann durch spezifische Methoden zur Einstellung der Farbtabelle gelöst werden: Mit der Berechnung jedes Bildpunktes werden global pro Bild je ein Maximum und ein Minimum pro akustischer Karte berechnet. Mit einer Menuefunktion "REL" (Relativkontrast) wird die Farbtabelle zwischen globales Maximum und globales Minimum einer einzelnen akustischen Karte gelegt. Damit entsteht bereits eine erkennbare, akustische Karte. Mit einer anderen Menuefunktion "ABS" wird die Farbtabelle zwischen Maximum und Minimum eines ganzen Films gelegt. Interessiert ein definiertes Kontrastverhältnis (z.B. -3 dB, oder -50 mPa), so wird (z.B. bei Filmen) vorteilhaft vom Maximum des Bildes ein interaktiv eingestellter Wert "minus delta" abgezogen, um das darzustellende Minimum zu ermitteln. Als default-Einstellung liefert diese Methode gegenüber den Methoden "ABS" und "REL" vollautomatisch hochwertige Bilder und Filme, in denen die Maxima sofort zu erkennen sind. Wenn ein Bild zu Vergleichszwecken auf eine vorgegebene Farbtabelle zentriert werden soll, erfolgt dies manuell mittels Menuefunktion "MAN". Hierbei geht ein zweifach-Dialogfenster (für max und min) auf. Eine weitere Menuefunktion "LOG" schaltet zwischen linearer Pascal- und logarithmischer dB-Darstellung der Farbtabelle um. Sind die Emissionen mehrerer, berechneter Bilder zu vergleichen, erweist sich eine Menuefunktion "ALL" als nützlich: sie übergibt die Farbtabelleneinstellungen des aktuellen Bildes an alle anderen Bilder.

Es sind Methoden zu entwickeln, um auf einfache Weise akustische Standbilder (1) und akustische Filme (2) generieren zu können. Erfindungsgemäß kommen folgende Verfahren zur Anwendung:
(1) Zur Generierung eines akustischen Einzelbildes wird in einem Zeitfunktionsfenster das interessierende Zeitintervall markiert. Entsprechend der Cache-Struktur des Prozessors wird dieser u.U. in kleinere Abschnitte zerlegt. Für jeden Bildpunkt wird nun der Interferenzwert bestimmt und zwischengespeichert. Das jeweilige Bild eines Abschnitts wird so berechnet. Die Bilder der Abschnitte werden mit gleitendem Mittelwert zum Gesamtbild des Rechenbereiches addiert und angezeigt. Man erkennt dies an einem schrittweisen Aufbau des Ergebnisbildes. In den Betriebsmoden Live-Preview oder akustisches oszilloskop wird der Rechenbereich nicht manuell vorgegeben, stattdessen wird ein voreingestellter Wert gewählt.
(2) Zur Berechnung eines akustischen Films wird wiederum ein interessierendes Zeitintervall vorgegeben. Über die Wahl einer Bildfrequenz werden Zeitintervalle für alle Einzelbilder bestimmt. Jeder Abschnitt erzeugt ein einzelnes Teilbild. So berechnete Filme erwecken allerdings noch einen stark zerhackten Eindruck. Um zu glätten, werden eine Anzahl von Teilbildern miteinander gemittelt. Die Anzahl zu mittelnder Bilder wird als Faktor interaktiv vorgegeben. Ebenso können auch Bildfrequenz und Intervall pro Bild vorgegeben werden, um den Faktor aus der Intervallbreite zu bestimmen.

Die digitalisierten Zeitfunktionen werden in einem virtuellen Raum, in welchem die Mikrofonkoordinaten x, y, z erfasst sind, im Computer zeitlich rückwärts abgespielt. Es treten Interferenzen an den Stellen auf, die den Erregungsquellen und -orten entsprechen.

Für jeden zu bestimmenden Punkt einer zu berechnenden Fläche wird dazu der Abstand zu jedem Mikrofon (oder Sensor) des Arrays ARR bestimmt. Aus den Abständen wird die Laufzeit T1, T2 bis TN der Signale vom erregenden Ort P hin zu Sensoren (Mikrofonen) K1, K2 bis KN ermittelt (Figur 8). (Zwischen dem Mittelpunkt des Arrays - das kann der Ort sein, an dem die Kamera positioniert ist - und dem Punkt P benötigt der Schall eine Laufzeit von TF.)

Jeder zu bestimmende Punkt der zu bestimmenden Fläche erhält ein Tupel der Zeitverschiebungen oder Verzögerungszeiten ("Maake"), die den Mikrofonen zugeordnet sind. Werden die Kanaldaten der Mikrofone nun entsprechend der Maske des zu berechnenden Ortes kompensierend gegen die Zeitachse verschoben, so kann durch einfache, sampleweise, algebraische Verknüpfung der Zeitfunkfunktionen Z1, Z2 bis ZN die Zeitfunktion ZP* am zu bestimmenden Ort P approximiert werden. Dieses Vorgehen ist bekannt, aber nicht effizient: hat man viele Ortspunkte zu berechnen, so ist die Relativverschiebung der einzelnen Kanäle zur Kompensation der Zeitverschiebungen zu zeitaufwendig.

Es ist günstiger, die für einen Ort P und einen Zeitpunkt T0 zu bestimmende algebraische Verknüpfung der Zeitfunktionen dadurch zu bilden, dass jeweils um die Delays der Maske des Ortes verschoben in die Kanaldaten gegriffen wird. Dazu muss die Maske MSK in Richtung des Zeitlaufes in die Kanaldaten K1, K2 ... KN gelegt werden. Fig. 9 zeigt die Maske MSK eines Ortspunktes P (mit von P ausgehender Zeitfunktion ZP) in den Kanaldaten K1 und K2. Zu den Strecken P-K1, P-K2 bis P-KN in Fig. 8 zwischen Punkt P und den Mikrofonen K1, K2 ... KN gehörende Zeitverschiebungen oder Verzögerungszeiten T1 bis TN bilden die Maske des Ortes P.

Wird nun (symbolisch) durch die Löcher der Maske von P hindurch in die Kanaldaten gegriffen, entsteht eine Approximation der Zeitfunktion des betrachteten Ortes P. In üblicher Weise können von dieser Zeitfunktion Effektivwert oder Maximum und Minimum (als Zahl) bestimmt werden, diese Zahl wird als so genannter Interferenzwert des Punktes abgespeichert.

Nun können verschieden viele Samples der Kanaldaten benutzt werden, um einen Interferenzwert zu bestimmen. Das Spektrum reicht von einem Sample bis zur vollen Kanaldatenlänge.

Stellt man die erhaltenen Interferenzwerte aller Punkte einer zu bestimmenden Fläche für alle zu berechnenden Punkte für nur einen Zeitpunkt als Grau- oder Farbwerte in einem Bild dar, und tut man dies fortfolgend für alle Zeitpunkte, so entsteht eine Kinematographie (ein Movie) des rückwärts laufenden Wellenfeldes. Dieses ist dadurch gekennzeichnet, dass die zeitlich vorangehenden Impulsspitzen prinzipbedingt, entgegen unserer Erfahrung, im Innern kreisförmiger Wellenfronten liegen.

Wird dieses Movie in fortschreitender Zeitrichtung berechnet, läuft das entstehende Wellenfeld zusätzlich rückwärts, die Wellen ziehen sich zusammen. Wird entgegen der Zeitrichtung gerechnet, breiten sich die Wellen zwar in Richtung unsrer Erfahrung aus, aber die Wellenfront bleibt dennoch im Welleninnern.

Berechnet man hingegen die Zeitfunktion eines Ortes P mit dessen Maske MSK für alle Zeitpunkte, so kann man anschließend gängige Operatoren wie Effektivwert, Maximum, Sigmoid etc. nutzen, um einen einzelnen Wert für diesen Ort zu bestimmen, dass eine Aussage über die mittlere Höhe der Zeitfunktion möglich wird.

Werden Interferenzwerte für alle Punkte eines Bildes bestimmt, entsteht eine Matrix der Interferenzwerte. Wird der Interferenzwert als Grau- oder Farbwert einem Bildpunkt, zugeordnet, erhalten wir z.B. ein Schallbild des beobachteten Objekts.

Eine vorteilhafte Ausführung zur Messung auf große Entfernungen besteht darin, das Ergebnis der Addition entlang der Maske nicht im Zeitpunkt T0 der Zeitfunktion ZP* zu notieren, sondern dieses Ergebnis an einem Zeitpunkt Tx zu notieren, so dass die gemeinsame Verzögerungszeit aller Kanäle eliminiert wird. Die Zeitdifferenz Tx minus T0 wird dabei z.B. gerade so groß gewählt, wie das kleinste Delay zwischen dem Punkt P und einem Sensor (Mikrofon) K1 bis KN, im Beispiel T1.

Wird die mediale Ausbreitungsgeschwindigkeit variiert, so wünscht man Movies oder Bilder mit vergleichbarem Zeitbezug. Dazu besteht eine vorteilhafte Ausführung darin, den Ort Tx der Eintragung des Ergebnisses der Maskenoperation in die Ergebniszeitfunktion ZP* mittig zu wählen. Die Zeitverschiebung, aus der Tx bestimmt werden kann, wird dazu aus der halbierten Differenz von größtem Maskenwert (z.B. TN) minus kleinstem Maskenwert (z.B. T1) eines zentral im Bildfeld liegenden Ortes P bestimmt, Tx = T0 + (TN + T1)/2.

Da wir es mit digitalisierten Kanaldaten zu tun haben, die zeitlichen Abstände zwischen P und den Mikrofonen aber nicht ganzzahlig zu erwarten sind, sind zwei Arten von Rundungen vorgesehen: bei einer ersten Art wird ein jeweils nächstliegendes Sample des jeweiligen Kanals genommen. Bei einer zweiten Art wird zwischen zwei benachbarten Kanaldatensamples interpollert.

Die Abarbeitung der Kanaldaten kann auf zweierlei Weise erfolgen. Schreitet man in Richtung der Zeitachse voran, so laufen zwar die Wellenfelder rückwärts, aber der Zeitbezug zu einer äußeren Zeitreferenz bleibt erhalten. Diese Art ist zur Anwendung geeignet, wenn akustische mit.optischen Bildfolgen überlagert werden sollen. Schreitet man hingegen auf der Zeitachse rückwärts, so scheinen die Wellenfelder zu expandieren, es ergibt sich der Eindruck, der unserem Erfahrungswert entspricht.

Nun können wir mit derselben Einrichtung auch (meist spiegelverkehrte) Projektionen mit permanent vorwärts laufender Zeit berechnen, wie sie aus der Optik bekannt sind. Dazu benötigen wir ein zusätzliches Offsetregister, in welches die Verzögerungskomperisationen der einzelnen Kanäle einzutragen sind. Einmalig werden die Kanaldaten entsprechend eingetragener Offsets verschoben und wieder abgespeichert.

Dieses Offsetregister leistet auch zur Kalibrierung der Mikrofone nützliche Dienste. Geringe Parameterschwankungen können ausgeglichen werden, wenn jede Kanaldatenaufnahme vor Abspeicherung entsprechend dem Offsetregister kompensiert wird.

Direkte Überlagerungen von akustischer Karte und Videobild sind schwer zu erkennen, wenn beide farbig sind. Erfindungsgemäß können verschiedene Bildüberlagerungstypen über Menuebuttons eingestellt werden: "NOISE" akustische Karte on/off, "VIDEO" Videobild on/off, "EDGES" Kantenextraktion des Videobilds on/off, "GRAY" Grauwertwandlung des Videobildes on/off. Ein Schieberegler steuert dabei Schwellwert eines Operators zur Kantenextraktion oder Kontrast oder Grauwert des Videobildes.

Für die Analyse einer Maschine sind verschiedene Informationen, wie z.B. Zeitfunktionen verschiedener Orte, Schalldruck, Koordinaten, Frequenzfunktion oder Klang von Interesse. Es sind Methoden effizienter Interaktionen zwischen Ort und Frequenz- oder Zeitfunktionen anzugeben. Dies wird gelöst, indem bei bestimmten Methoden unterschiedliche Menueeinträge zur Verfügung stehen:
(1) Mausfunktionen: Durch Schieben der Maus kann im akustischen Bild ein Ort angewählt werden. Permanent wird an der Maus ein kleines Mausfenster mitgeschoben, auf dem optional der Schalldruck des jeweiligen Ortes oder die aktuellen Koordinaten des Ortes angezeigt werden. Beim Drücken der rechten Maustaste werden folgende Menueeinträge wählbar:
   - Rekonstruktion der Zeitfunktion des aktuellen Ortes
   - Rekonstruktion der Frequenzfunktion des Ortes
   - Anzeige der Koordinaten des Ortes
   - Anzeige des Schalldrucks des Ortes
   - Speichern als Bild (z.B. als JPG, GIF oder BMP) oder als Movie (z.B. als AVI oder MPG)
   - Speichern als Wertematrix in einem speziellen Fileformat (Bild oder Movie)
(2) Abhören eines Bildes: Hinter jedem Bildpunkt wird die rekonstruierte Zeitfunktion zwischengespeichert. Wird eine Menuefunktion "Abhören" gewählt, wird optional repetierend die unter dem Mauszeiger liegende Zeitfunktion über die Soundkarte ausgegeben.
(2) Spektralbilddarstellung: Die Rechenoption stellt zwei wechselwirkende Fenster bereit: Bild und Spektrum. Klickt man mit der linken Maustaste ins Bild, wird das Spektrum des angeklickten Ortes im anderen Fenster angezeigt. Markiert man dort ein Frequenzintervall, erscheint das Bild zum selektierten Frequenzintervall. Hinter jedem Bild wird dazu in dritter Dimension eine der gewählten Samplezahl entsprechende Anzahl von Fourierkoeffizienten abgelegt. Es stehen die Speicheroptionen Photo (z.B. JPG) und Wertematrix des aktuellen Bildes sowie Wertematrix aller Bilder eines Bereichs oder Movie aller Bilder eines Bereichs (AVI) zur Verfügung.
(3) Differenzbilddarstellung: Vorab ist zusätzlich ein Referenzbild als Wertematrix zu laden. Im Menue erscheint die wahloption "Difference Image". Es wird ein akustisches Bild berechnet. Aus der numerischen Differenz der Effektivwerte zwischen Bild und Referenzbild wird das Differenzbild berechnet und dargestellt.
(4) Zeitfunktions-Korrelationsbilddarstellung: Um ein bestimmtes Störgeräusch in einem Bild zu finden, wird ein akustisches Bild berechnet. Die rekonstruierten Zeitfunktionen sind hinter den Bildpunkten in dritter Dimension zwischengespeichert. Zusätzlich ist ein Bereich einer Zeitfunktion geeignet zu markieren. Bei Wahl der Option werden die Kreuzkorrelationskoeffizienten aller Bildpunkte mit der markierten Zeitfunktion berechnet und als Ergebnisbild dargestellt.
(5) Spektrale Differenzbilddarstellung: Zum Klassifikation z.B. von Motoren sind ortsselektive Korrelationen zwischen Soll- und Istzustand von Interesse. Dazu wird Bild oder Spektralbild als Referenzbild geladen, ein Bild oder Spektralbild gleicher Bildauflösung wird berechnet bzw. geladen. Die Kreuzkorrelationen der Zeitfunktionen der Bildpunkte werden im zeit- oder Frequenzbereich berechnet und als Ergebnis dargestellt. Eine zusätzlich auf das Bild legbare Schwellwertmaske gestattet zusätzlich eine Klassifikation.
(6) Autokorrelationsbild und -film: Wird nach einem Geräusch gesucht, von dem lediglich die Periode, nicht aber die Zeitfunktion bekannt ist, bietet sich diese Methode an. Im Menue wird die Option gewählt. Ein Dialog fordert zur Eingabe der gesuchten Periodendauer auf. Bildpunkt für Bildpunkt wird nun die rekonstruierte Zeitfunktion berechnet und mit sich selbst um die Periode verschoben autokorreliert. Der Ergebniskoeffizient wird in bekannter Weise dargestellt.

Die Koordinaten von Arrays sind im Millimeterbereich aufgrund von Fertigungstoleranzen ungenau. Dies kann bei Signalanteilen im niederen Ultraschallbereich zu fehlerhaften Bildern führen. Es sind Maßnahmen zur Verhinderung dieser Fehler zu ergreifen. Erfindungsgemäß ist eine Korrektur der Koordinaten der Mikrofone mittels einer spezifischen Kalibriersoftware möglich. Ausgehend von einem Testsignal wird eine mittlere Verzögerungszeit gemessen. Diese wird benutzt, um die jeweiligen Koordinaten im Initialisierungsfile des Mikrofonarrays für jedes Mikrofon zu korrigieren.

Fremdinterferenz gefährdet die Darstellung kurzer Wellen bei höheren Frequenzen. Insbesondere ist der Gleichlauf aller Mikrofone und Verstärkerkanäle durch verschiedene Maßnahmen im Bereich eines Samples sicherzustellen. Das geschieht, indem alle Verstärkungseinstellungen, Laufzeiten und Frequenzabhängigkeiten der Vorverstärker mit einem automatischen Meßplatz vermessen werden. Die Daten werden im Parameterfile des Recorders gespeichert, die Zeitfunktionen mit den Meßdaten kompensiert. Die Mikrofone werden speziell selektiert, Verzögerungszeiten werden gemessen und zusammen mit Ortskurven verschiedener Frequenzen im Parameterfile des Arrays für Kompensationszwecke gespeichert. Koordinaten der Mikrofonarrays werden akustisch überprüft und ggf. korrigiert.

Es ist sicherzustellen, daß vor einer Messung die präzise Überlagerung und Ausrichtung zwischen Videobild und akustischem Bild überprüft werden kann. Dazu erfolgt ein Kalibriertest des Systems mittels sog. Klicker. Dieser erzeugt mittels Hochtonlautsprecher ein Testgeräusch. Das System arbeitet korrekt, wenn akustische Karte und Videobild am Lautsprecher übereinstimmen.

Für Mikrofonarray, Videokamera, Bildfeld und 3D-Objekte sind geeignete Koordinatensysteme zu bestimmen. Die erfindungsgemäße Lösung besteht darin, in einem einzigen Koordinatensystem zu arbeiten, dessen Achsen entsprechend rechter-Hand-Regel angeordnet sind. Mikrofonarray und Videokamera bilden eine Einheit, deren Koordinaten in einem Parameterfile gespeichert werden. Das zu berechnende Bildfeld wird vorteilhaft ebenfalls im Koordinatensystem des Arrays bestimmt. 3D-Objekte bringen i.a. ihr eigenes Relativkoordinatensystem mit und werden über entsprechende Koordinatentransformationen eingebunden.

Werden akustische Bilder komplexer Objekte angefertigt, können praktisch nicht vorhersehbare Situationen (zuviel Lärm aus dem Umfeld etc.) die Bildqualität erheblich beeinträchtigen. Um vorzubeugen, daß stets qualitativ hochwertige Bilder entstehen, ist eine Sucherfunktion (Live Preview) - analog der eines Fotoapparats - von Vorteil. Es werden problemangepaßt repetierend wählbar Zeitfunktionsstücken sowie ein zugehöriges Foto aufgenommen und zusammen zu einem akustischen Sucher-Bild verarbeitet, berechnet und angezeigt. Während der Rechenzeit werden bereits neue Daten aufgenommen. Sobald die Rechnung beendet ist, beginnt der Zyklus von vorn. Das Sucher-Bild wird genauso verarbeitet, wie jede andere akustische Aufnahme. Die Sucherfunktion wird automatisch beim Öffnen des Suchbildfensters eingeschaltet und gestattet je nach Rechenleistung eine mehr oder weniger flüssige, filmartige Darstellung der momentanen Umgebungsgeräusche als bewegter Film.

Übersteuerungen der Mikrofonkanäle führen zu undefinierten Zusatzverzögerungen einzelner Kanäle, die das akustische Bild erheblich verfälschen können. Es sind Maßnahmen zu ergreifen, die eine so gestörte Aufnahme auch nachträglich identifizierbar machen. Erfindungsgemäß erfolgt eine Überwachung der Aussteuerung der im Recorder für Zeitfunktionen aufgenommenen Samples zweckmäßig über eine Aussteuerungsanzeige per Software. Zusätzlich wird bei Aufnahme im Fenster der Zeitfunktionsdarstellung ein fixer Maßstab initialisiert, der der Vollaussteuerung der Analog-Digital-Converter (ADC) des Recorders entspricht. Damit ist Unter- oder Übersteuerung der ADC auch bei späterer Auswertung der Aufnahme gut zu erkennen.

Zeitfunktionen sind nur mit Informationsverlust komprimierbar. Um eine verlustfreie und dennoch effiziente Speicherung zu ermöglichen, sind entsprechende Maßnahmen zu ergreifen. Erfindungsgemäß werden Samples von Zeitfunktionen in einem üblichen Sigma-Delta-Format oder in einem speziellen Datenformat mit 16 Bit plus einer für alle Samples eines (Mikrofon-) Kanals gültigen verstärkungskonstante (Offset) abgespeichert. Bei 16-bit Analog-Digitalwandlern entspricht die Konstante der eingestellten Verstärkung der Vorverstärker, bei höher auflösenden Wandlern (z.B. 24 Bit) werden nur die höchstwertigen 16 Bit und das Offset abgespeichert.

Mit einer akustischen Kamera sind Schallereignisse zu beobachten, die sporadisch auftreten. Erscheint das Ereignis, ist es zu spät, die Kamera auszulösen. Erfindungsgemäß werden alle Zeitfunktionen und Bilder deshalb in einen umlaufend organisierten Pufferspeicher geschrieben, der im Moment der Auslösung angehalten werden kann (Stop-Trigger) bzw. der im Moment der Auslösung bis zu einen Umlauf weiterläuft (Start-Trigger).

Für Datenrecorder sollen preiswerte, handelsübliche Bauelemente verwendet werden. Erfindungsgemäß wird deshalb jeder Kanal eines Datenrecorders mit einem Signalgenerator vermessen. Für den jeweiligen Datenrecorder wird ein gerätespezifischer Parameterfile oder Gerätetreiber angelegt, der alle aktuellen Stufenverstärkungen sowie die Grundverstärkung jedes Kanals enthält. Dieser File ist ladbar und wird bei Aufnahmestart ausgewählt und geladen.

Es ist sicherzustellen, daß Kennempfindlichkeiten, Ortskurven und Verzögerungszeiten (Delays) der Mikrofone und Verstärkerkanäle verwechslungsfrei interpretiert werden können. Dazu wird die Gesamtverstärkung jedes Kanals aus den Daten im Initialisierungsfile des Mikrofonarrays (Empfindlichkeit der Mikrofone) sowie dem des Recorders (eingestellte Verstärkung) ermittelt. Der Schalldruck jedes Kanals wird aus den Samplewerten der ADC unter Berücksichtigung der aktuell eingestellten Verstärkung ermittelt.

Oft sind externe Signale (Sonderkanäle, z.B. Spannungsverläfe, Druckverläufe, etc.) zusammen mit den Mikrofonzeitfunktionen des Arrays aufzunehmen. I.a. haben deren Quellen aber andere Aussteuerung. Erfindungsgemäß werden deshalb die Mikrofone des Arrays mit einem Regler gemeinsam, alle Sonderkanäle hingegen einzeln ausgesteuert.

Sonderkanäle bedienen oft verschiedenartige Sensoren, z.B. für Spannungsverlauf, Stromverlauf, Helligkeit. Dies kann später zu Verwechslungen führen. Erfindungsgemäß wird pro Kanal ein Übertragungsfaktor gespeichert.

Parameter des Mikrofonarrays sind i.a. unveränderlich, während Parameter von Sonderkanälen oft variiert werden. Erfindungsgemäß werden beide Arten von Parametern in getrennten Files aufbewahrt, um Re-Initialisierbarkeit der Array-Parameter zu erreichen.

Zur Darstellung des Schalldrucks in den Zeitfunktionen wird die Mikrofonkonstante einbezogen. Werden die Verstärkerkanäle überprüft, führt dies zu verschieden hohen Anzeigen. Erfindungsgemäß wird für Serviceaufgaben eine Umschaltoption bereitgestellt, die die Spannung an den Verstärkereingängen (ohne Mikrofonkonstante) darstellbar macht.

Die Erfindung ist nicht beschränkt auf die hier dargestellten Ausführungsbeispiele. Vielmehr ist es möglich, durch Kombination und Modifikation, der genannten Mittel und Merkmale weitere Ausführungsvarianten zu realisieren, ohne den Rahmen der Erfindung zu verlassen.

## Patentansprüche

1. Verfahren zur bildgebenden Darstellung von akustischen Objekten durch die Aufnahme von akustischen Karten über ein Mikrofonarray (MA), denen ein Bezugsbild des Messobjekts zugeordnet wird, wobei
• das Mikrofonarray (MA) und eine optische Kamera (VK) in einer vorgebbaren Lage zueinander angeordnet werden und von der optischen Kamera (VK) automatisch wenigstens ein Teil der Messungen dokumentiert wird,
• akustische Karte und optisches Bild **dadurch** überlagert werden, dass Objektabstand und Kameraöffnungswinkel ein optisches Bildfeld definieren, auf welches die akustische Karte gerechnet wird,
• berechnungsrelevante Parameter der Mikrofone (MIC) und der Kamera eines Arrays in einem Parameterfile des Arrays unverwechselbar gespeichert werden,
• Verstärkerparameter in einem oder mehreren, den Verstärkerbaugruppen oder dem Datenrecorder (dRec) zugeordneten Parameterfile gespeichert werden,
• Mikrofonarray (MA) und Verstärkerbaugruppen bezichungsweise Datenrecorder jeweils elektronische Signaturen besitzen, die entsprechende Parameterfiles unverwechselbar lädt,
• das zu berechnende akustische Bildfeld in Teilflächen zerlegt wird, deren Schwerpunkte Koordinaten der zu berechnenden Bildpunkte darstellen,
• akustische Karten optimal belichtet werden, indem verschiedene Methoden wie Absolut, Relativ, Manuell, Minus_Delta, Lin/Log, Al, Effektivwert, Peak gewählt werden, um Minimum und Maximum einer Farbskala geeignet vorzugeben,
• Gleichlauffehler aller Mikrofone (MIC) und Verstärkerkanäle **dadurch** eliminiert werden, dass Aufnahmen mit entsprechenden Parametern aus den Parameterfiles des Mikrofonarrays (MA) und des Datenrecorders (dREC) kompensiert werden,
• Datensätze der Kameraaufnahmen und ihnen zugeordnete Datensätze der Mikrofon-Zeitfunktionen, Zeitsynchronsignale, Szeneninformationen und Parameterfiles von Mikrofonarray (MA) und Datenrecorder (dRec) zusammen mit Informationen über diese Zuordnung abgespeichert werden.

2. Verfahren nach Anspruch 1, **dadurch gekennzeichnet, dass** zu Punkten der akustischen Karte ein Tupel von Verzögerungszeiten bestimmt wird, wobei ein Tupel die Verzögerungszeiten der akustischen Signale zwischen erregendem Ort und den Mikrofonen (MIC) des Arrays umfaßt.

3. Verfahren nach Anspruch 1 oder 2, **dadurch gekennzeichnet, dass** für jedes Mikrofon (MIC) des Mikrofonarrays (MA) der Typ, die Kennempfindlichkeit, die Membran-Mittelpunktskoordinate (x, y, z), die Achsenausrichtung (dx, dy, dz), die Ortskurven der Amplituden und der Verzögerungszeiten und für die optische Kamera (VK) typ. Bildöffnungswinkel, maximale Bildfrequenz und Pixel auflösungen in einem dem Mikrofonarray (MA) zugeordneten Parameterfile gespeichert werden, wobei dem Parameterfile eine Identifikationsnummer zugeordnet wird, die mit der Hardware-Signatur des Arrays referenziert wird.

4. Verfahren nach mindestens einem der Ansprüche 1 bis 3, **dadurch gekennzeichnet, dass** vor einer Messung die präzise Überlagerung und Ausrichtung zwischen optischem Bild und akustischem Bild überprüft werden kann, indem mit einem Kalibriertester (KT) ein Testgeräusch erzeugt wird, mit dem die richtige Überlagerung von Kamerabild und akustischer Karte überprüft werden kann.

5. Vorrichtung zur bildgebenden Darstellung von akustischen Objekten durch die Aufnahme von akustischen Karten, denen ein Bezugsbild des Messobjekts zugeordnet wird, wobei die Vorrichtung ein Mikrofonarray (MA) umfasst, und in das Mikrofonarray (MA) eine optische Kamera (VK) integriert ist, die mit dem Mikrofonarray (MA) eine Einheit bildet, und wobei die Vorrichtung weiter Mittel umfasst zur Übertragung von Mikrofondaten, Kamerabild(em) und Zeitsynchroninformationen zwischen Mikrofonarray, einem Datenrecorder (dRec) und einer Datenverarbeitungseinrichtung (PC), wobei die Vorrichtung derart eingerichtet ist, dass
• berechnungsrelevante Parameter der Mikrofone (MIC) und der Kamera eines Arrays in einem Parameterfile des Arrays unverwechselbar gespeichert werden,
• Verstärkerparameter in einem oder mehreren, den Verstärkerbaugruppen oder dem Datenrecorder (dRec) zugeordneten Parameterfile gespeichert werden, und
• Gleichlauffehler aller Mikrofone (MIC) und Verstärkerkanäle eliminiert werden, indem Aufnahmen mit entsprechenden Parametern aus den Parameterfiles des Mikrofonarrays (MA) und des Datenrecorders (dRec) kompensiert werden.

6. Vorrichtung nach Anspruch 5, **dadurch gekennzeichnet, dass** alle Mikrofondaten eines Arrays über eine gemeinsame Verbindung wie Kabel oder Bus geführt werden und über einen gemeinsam ein- oder mehrteiligen Stecker an den Datenrecorder (dRec) angeschlossen sind.

7. Vorrichtung nach Anspruch 5 oder 6, **dadurch gekennzeichnet, dass** ein Mikrofonarray (MA) einen Signaturchip im an den Datenrecorder (dRec) angeschlossenen Stecker enthält.

8. Vorrichtung nach mindestens einem der Ansprüche 5 bis 7,
**dadurch gekennzeichnet**e dass eine unlösbar verbundene Einheit aus Mikrofonarray (MA) und Videokamera (VK) auf einem Fotostativ (ST) schwenkbar montiert ist.

9. Computerprogramm-Erzeugnis, das ein computer lesbares Speichermedium umfaßt, auf dem ein Programm gespeichert ist, das es einem Computer ermöglicht, nachdem es in den Speicher des Computers geladen worden ist, ein Verfahren zur bildgebenden Darstellung von akustischen Objekten durch die Aufnahme von akustischen Karten über ein Mikrofonarray (MA), denen ein Bezugsbild des Messobjekts zugeordnet wird, durchzuführen, wobei die bildgebende Darstellung die Verfahrensschritte gemäß einem der Ansprüche 1 bis 4 umfaßt.

10. Computerlesbares Speichermedium, auf dem ein Programm gespeichert ist, das es einem Computer ermöglicht, nachdem es in den Speicher des Computers geladen worden ist, ein Verfahren zur bildgebenden Darstellung von akustischen Objekten durch die Aufnahme von akustischen Karten über ein Mikrofonarray (MA), denen ein Bezugsbild des Messobjekts zugeordnet wird, durchzuführen, wobei die bildgebende Darstellung die Verfahrensschritte gemäß einem der Ansprüche 1 bis 4 umfaßt.

## Claims

1. Method for imaging acoustic objects by using a microphone array (MA) to record acoustic maps which have a reference image of the measured object associated with them, where
• the microphone array (MA) and an optical camera (VK) are arranged in a specifiable position to one another and the optical camera (VK) automatically documents at least part of the measurements;
• the acoustic map and the optical image field are superimposed by having the object distance and the camera's aperture angle define an optical image field on which the acoustic map is calculated;
• calculation-relevant parameters of the microphones (MIC) and the camera of an array are stored in an unmistakable way in a parameter file associated with the array;
• amplifier parameters are stored in one or more parameter file(s) which are associated with the amplifier modules or the data recorder (dRec);
• the microphone array (MA) and the amplifier modules or data recorder are each given electronic signatures which unmistakably load the corresponding parameter files;
• the calculated acoustic image field is decomposed into subareas whose centers of gravity represent the coordinates of the pixels to be calculated;
• acoustic maps are optimally exposed by selecting various methods, such as absolute, relative, manual, minus_delta, lin/log, all, effective value, peak, to specify the suitable minimum and maximum of a color scale;
• synchronization errors of all microphones (MIC) and amplifier channels are eliminated by compensating the pictures with corresponding parameters from the parameter files of the microphone array (MA) and the data recorder (dRec);
• records of the camera pictures and the associated records of the microphone time functions, time synchronization signals, scene information, and parameter files of the microphone array (MA) and the data recorder (dRec) are stored together with information about this association.

2. Method according to claim 1, **characterized in that** points on the acoustic map have a tuple of delay times determined for them which comprises the delay times of the acoustic signals between the exciting site and the array's microphones (MIC).

3. Method according to claim 1 or 2, **characterized in that**, for each microphone (MIC) of the microphone array (MA), the type, identification sensitivity, coordinates of membrane center (x, y, z), axis orientation (dx, dy, dz), loci of the amplitudes and delay times, and, for the optical camera ,(VK), the type, aperture, maximum image frequency, and pixel resolutions are stored in a parameter file which is associated with the microphone array (MA) and which has an identification number assigned to it, which is referenced with the array's hardware signature.

4. Method according to at least one of the claims 1 to 3, **characterized in that** before a measurement it is possible to check the precise superposition and orientation between an optical image and acoustic image by producing a test sound with a calibration tester (KT), which can check the correct superposition of the camera image and the acoustic map.

5. Device for imaging acoustic objects by recording acoustic maps having a reference image of the measured object associated with them, where the device comprises a microphone array (MA), and where the microphone array (MA) has an optical camera (VK) integrated so that the two form a unit, and where the device further comprises means for transferring microphone data, camera image(s), and time synchronization information between microphone array (MA), data recorder (dRec), and a data processing device (PC), where the device is arranged in such a way that
• calculation-relevant parameters of the microphones (MIC) and the camera of an array are stored in an unmistakable way in a parameter file associated with the array;
• amplifier parameters are stored in one or more parameter file(s) which are associated with the amplifier modules or the data recorder (dRec) and
• synchronization errors of all microphones (MIC) and amplifier channels are eliminated by compensating the pictures with corresponding parameters from the parameter files of the microphone array (MA) and the data recorder (dRec).

6. Device according to claim 5, **characterized in that** all microphone data of an array is fed through a common connection, such as cable or bus, and connected to the data recorder (dRec) through a common one or more-part plug.

7. Device according to claim 5 or 6, **characterized in that** a microphone array (MA) contains a signature chip in the plug connected to the data recorder (dRec).

8. Device according to at least one of claims 5 to 7, **characterized in that** a unit consisting of the microphone array (MA) and a video camera (VK) connected in a non-detachable manner is mounted on a tripod (ST) so that it can pivot.

9. Computer program product comprising a computer-readable storage medium that has a program stored on it which, once it has been loaded into a computer's memory, allows the computer to image acoustic objects using a microphone array (MA) to record acoustic maps which have a reference image of the measured object associated with them in an imaging process comprising the steps described in one of claims 1 through 4.

10. Computer-readable storage medium that has a program stored on it which, once it has been loaded into a computer's memory, allows the computer to image acoustic objects using a microphone array (MA) to record acoustic maps which have a reference image of the measured object associated with them in an imaging process comprising the steps described in one of claims 1 through 4.

## Revendications

1. Procédé de représentation imagée d'objets acoustiques par prise de cartes acoustiques auxquelles est associée une image de référence de l'objet mesuré, au moyen d'un réseau de microphones (MA), procédé dans lequel
• le réseau de microphones (MA) et une caméra optique (VK) sont disposés l'un par rapport à l'autre dans une position prédéfinie, et dans lequel au moins une partie des mesures est documentée par la caméra optique (VK),
• la carte acoustique et l'image optique sont superposées du fait que la distance de l'objet et l'angle d'ouverture de la caméra définissent un champ image optique sur lequel est calculée la carte acoustique,
• des paramètres des microphones (MIC) et de la caméra d'un réseau lesquels sont pertinents pour le calcul sont enregistrés dans un fichier de paramètres du réseau de manière à ne pas pouvoir être confondus,
• des paramètres d'amplification sont enregistrés dans un ou plusieurs fichier(s) de paramètres associé(s) aux modules amplificateurs ou à l'enregistreur de données (dRec),
• le réseau de microphones (MA) et les modules amplificateurs, respectivement l'enregistreur de données, possèdent respectivement des signatures électroniques lesquelles chargent des fichiers de paramètres correspondants de manière à ce que ceux-ci ne puissent pas être confondus,
• le champ image acoustique à être calculé est divisé en surfaces partielles, les centres de gravité desquelles représentent des coordonnées des points d'image à être calculés,
• des cartes acoustiques sont éclairées de façon optimale du fait que des méthodes différentes, comme absolue, relative, manuelle, Minus_Delta, Lin/Log, tout, valeur effective, pic, sont choisies pour prédéfinir de façon adéquate un minimum et un maximum d'une échelle de couleurs,
• des erreurs de synchronisation de tous les microphones (MIC) et de tous les canaux d'amplification sont éliminées en compensant des prises par des paramètres correspondants contenus dans les fichiers de paramètres du réseau de microphones (MA) et de l'enregistreur de données (dRec),
• des enregistrements des prises de vue de la caméra et des enregistrements des fonctions de temps de microphones, des signaux de synchronisation temporelle, des informations de scène, et des fichiers de paramètres du réseau de microphones (MA) et de l'enregistreur de données (dRec), associés aux enregistrements des prises de vue de la caméra, sont enregistrés avec des informations sur cette association.

2. Procédé selon la revendication 1, **caractérisé en ce qu'**un n-uplet contenant les temps de delai est défini par rapport à des points de la carte acoustique, un n-uplet contenant les temps de delai des signaux acoustiques entre le lieu d'excitation et les microphones (MIC) du réseau.

3. Procédé selon la revendication 1 ou 2, **caractérisé en ce que** le type, la sensibilité, la coordonnée centrale de la membrane (x, y, z), l'orientation de l'axe (dx, dy, dz), les lieux géométriques des amplitudes et des temps de delai de chacun des microphones (MIC) faisant partie du réseau de microphones (MA), ainsi que le type, l'angle d'ouverture de l'image, la fréquence d'image maximale et les résolutions en pixels de la caméra optique (VK) sont enregistrés dans un fichier de paramètres associé au réseau de microphones (MA), un numéro d'identification lequel est référencé par la signature matériel du réseau étant associé au fichier de paramètres.

4. Procédé selon l'une au moins des revendications 1 à 3, **caractérisé en ce qu'**il est possible de vérifier la superposition et l'orientation précises entre l'image optique et l'image acoustique avant de faire une mesure, en produisant un bruit de contrôle par un testeur de calibration (KT), le bruit de contrôle permettant de vérifier si la superposition de l'image de caméra et de la carte acoustique est correcte.

5. Dispositif de représentation imagée d'objets acoustiques par prise de cartes acoustiques auxquelles est associée une image de référence de l'objet mesuré, dans lequel le dispositif comprend un réseau de microphones (MA), et dans lequel une caméra optique (VK) laquelle forme une unité avec le réseau de microphones (MA) est intégrée dans le réseau de microphones (MA), le dispositif comprenant en outre des moyens pour la transmission de données de microphones, d'image(s) de caméra et d'informations de synchronisation temporelle entre le réseau de microphones, un enregistreur de données (dRec) et un dispositif de traitement de données (PC), le dispositif de représentation imagée d'objets acoustiques étant agencé de manière à ce que
- des paramètres des microphones (MIC) et de la caméra d'un réseau lesquels sont pertinents pour le calcul sont enregistrés dans un fichier de paramètres du réseau de manière à ne pas pouvoir être confondus,
- des paramètres d'amplification sont enregistrés dans un ou plusieurs fichier(s) de paramètres associé(s) aux modules amplificateurs ou à l'enregistreur de données (dRec), et
- des erreurs de synchronisation de tous les microphones (MIC) et de tous les canaux d'amplification sont éliminées en compensant des prises par des paramètres correspondants contenus dans les fichiers de paramètres du réseau de microphones (MA) et de l'enregistreur de données (dRec).

6. Dispositif selon la revendication 5, **caractérisé en ce que** toutes les données des microphones d'un réseau sont guidées par une connexion commune, comme un fil ou un bus, et reliées à l'enregistreur de données (dRec) par un connecteur commun monobloc ou par un connecteur commun en plusieurs parties.

7. Dispositif selon la revendication 5 ou 6, **caractérisé en ce qu'**un réseau de microphones (MA) comporte une puce à signature disposée dans le connecteur lequel est relié à l'enregistreur de données (dRec).

8. Dispositif selon l'une au moins des revendications 5 à 7, **caractérisé en ce qu'**une unité comprenant le réseau de microphones (MA) et la caméra vidéo (VK) et étant reliée de manière inséparable est montée pivotant sur un trépied photo (ST).

9. Produit-programme informatique comprenant un support d'enregistrement lisible par ordinateur, sur lequel est enregistré un programme lequel permet à un ordinateur de réaliser un procédé de représentation imagée d'objets acoustiques par prise de cartes acoustiques auxquelles est associée une image de référence de l'objet mesuré, au moyen d'un réseau de microphones (MA), après que le programme ait été chargé dans la mémoire de l'ordinateur, la représentation imagée comprenant les étapes de procédé selon l'une des revendications 1 à 4.

10. Support d'enregistrement lisible par ordinateur, sur lequel est enregistré un programme lequel permet à un ordinateur de réaliser un procédé de représentation imagée d'objets acoustiques par prise de cartes acoustiques auxquelles est associée une image de référence de l'objet mesuré, au moyen d'un réseau de microphones (MA), après que le programme ait été chargé dans la mémoire de l'ordinateur, la représentation imagée comprenant les étapes de procédé selon l'une des revendications 1 à 4.
